(19) Europäisches Patentamt
European Patent Office
Office européen des brevets

(11) Veröffentlichungsnummer: **0 340 568 A1**

# (12) EUROPÄISCHE PATENTANMELDUNG

(21) Anmeldenummer: **89107233.2**

(22) Anmeldetag: **21.04.89**

(51) Int. Cl.⁴: **C08G 63/68 , C08G 63/60 , C09K 19/38**

(30) Priorität: **06.05.88 DE 3815521**

(43) Veröffentlichungstag der Anmeldung: **08.11.89 Patentblatt 89/45**

(84) Benannte Vertragsstaaten: **DE FR GB IT**

(71) Anmelder: **BAYER AG**

**D-5090 Leverkusen 1 Bayerwerk(DE)**

(72) Erfinder: **Pakull, Ralf, Dr.**
**Neue Linnar-Strasse 75**
**D-4150 Krefeld(DE)**
Erfinder: **Eckhardt, Volker, Dr.**
**Bodelschwinghstrasse 14**
**D-4150 Krefeld(DE)**
Erfinder: **Genz, Joachim, Dr.**
**Bodelschwinghstrasse 16**
**D-4150 Krefeld(DE)**
Erfinder: **Idel, Karsten, Dr.**
**Am Schwarzkamp 38**
**D-4150 Krefeld(DE)**
Erfinder: **Kricheldorf, Hans-Rytger, Prof. Dr.**
**Menzelstrasse 10**
**D-2000 Hamburg 52(DE)**
Erfinder: **Döring, Volker, Dr.**
**Sanmannreihe 45**
**D-2000 Hamburg(DE)**

## (54) Thermotrope aromatische Polyester, Verfahren zu ihrer Herstellung und ihre Verwendung zur Herstellung von Formkörpern, Filamenten, Fasern und Folien.

(57) Die in der Anmeldung beschrieben thermotropen aromatischen Polyester mit wiederkehrenden Einheiten der Formeln

$- \overset{O}{\overset{\|}{C}} - Ar^1 - O -$

$-O-Ar^2-O-$

und

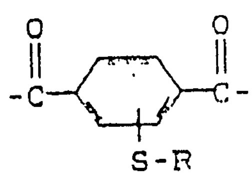

besitzen neben den für flüssigkristalline Materialien bekannten guten mechanischen Eigenschaften eine verbesserte Chemikalienbeständigkeit sowie niedrige Schmelzpunkte und damit eine gute Verarbeitbarkeit. Die thermotropen aromatischen Polyester werden verwendet zur Herstellung von Formkörpern, Filamenten, Fasern und Filmen.

EP 0 340 568 A1

## Thermotrope aromatische Polyester, Verfahren zu ihrer Herstellung und ihre Verwendung zur Herstellung von Formkörpern, Filamenten, Fasern und Folien

Die Erfindung betrifft hochmolekulare, härtbare, thermotrope aromatische Polyester mit ausgezeichneten mechanischen Eigenschaften und guter Verarbeitbarkeit, ein Verfahren zu ihrer Herstellung sowie ihre Verwendung zur Herstellung von Formkörpern, Filamenten, Fasern und Folien.

Als "thermotrop" bezeichnet man solche Substanzen, die flüssigkristalline Schmelzen bilden. Thermotrope Polyester sind bereits bekannt. Eine Literaturzusammenfassung befindet sich in der DE-OS 3 325 787 und EP-OS 134 959. Dort wird auch eine Untersuchung des flüssig-kristallinen Zustandes für Polymerschmelzen beschrieben.

Aus thermotropen Polyestern lassen sich durch thermoplastische Verformung Formkörper und Folien sowie durch Verspinnen aus der Schmelze Filamente und Fasern mit außergewöhnlichen mechanischen Eigenschaften herstellen. Voraussetzung ist jedoch, daß die Polyester unzersetzt schmelzbar sind.

Die einfachsten voll-aromatischen Polyester, wie Poly(4-hydroxybenzoat) und Poly(1,4-phenylenterephthalat) erfüllen diese Voraussetzungen nicht. Sie schmelzen unter Zersetzung erst bei etwa 600 °C.

Die DE-OS 2 025 971 betrifft hochmolekulare voll-aromatische Polyester auf Basis von p-Hydroxybenzoesäure, aromatischen Dicarbonsäuren, wie Terephthal- oder Isophthalsäure, und Diphenolen, wie Hydrochinon oder 4,4′-Dihydroxydiphenyl. Aufgrund der verwendeten Komponenten sind diese Polyester thermotrop. Sie können z.B. zu Fasern verarbeitet werden. Nachteilig sind vor allem die noch zu hohen Schmelzpunkte der meisten beschriebenen Polyester, so daß deren Verarbeitung mit einem höheren technischen Aufwand verbunden ist.

In der JP 6 069 132 werden hochmolekulare, lineare vollaromatische Polyester auf der Basis von aromatischen Dicarbonsäuren, wie Terephthalsäure oder Phenoxyterephthalsäure, und Diphenolen beschrieben. Aufgrund der hohen Schmelzpunkte der beschriebenen Polyester, lassen diese sich jedoch nur nach Zusatz von nicht geringen Anteilen eines inerten Lösungsmittels verarbeiten, das nach dem Verarbeitungsschritt durch Extraktion entfernt werden muß. Dieses Verfahren ist daher unwirtschaftlich.

Für einige Anwendungen (z.B. im Bereich der Anlagentechnik) ist die Chemikalienresistenz üblicher vollaromatischer Polyester zu niedrig. Dies setzt dem Einsatz solcher Polyester enge Grenzen.

Aufgabe der Erfindung ist es daher, thermotrope, lineare, aromatische Polyester mit verbesserter Chemikalienbeständigkeit bereitzustellen, die neben den für flüssig-kristalline Materialien bekannten guten mechanischen Eigenschaften zusätzlich noch niedrige Schmelzpunkte und damit gute Verarbeitbarkeit aufweisen.

Überraschenderweise wurde gefunden, daß linear aufgebaute thermotrope Polyester die einkondensierte Reste substituierter Terephthalsäuren enthalten, diese gewünschte Kombination vorteilhafter Eigenschaften aufweisen.

Gegenstand der Erfindung sind thermotrope, aromatische Polyester mit wiederkehrenden Einheiten der Formeln

$-\overset{\overset{O}{\|}}{C}-Ar^1-O-$ (I)

$-O-Ar^2-O-$ (II)

und

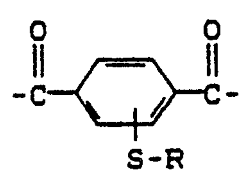

(III),

worin

$Ar^1$ und $Ar^2$ bivalente aromatische Reste mit 8 bis 16 C-Atomen darstellen, deren kettenverlängernde Bindungen zu mindestens 90 Mol-% coaxial oder parallel entgegengesetzt und zu höchstens 10 Mol-% gewinkelt sind, wobei diese Reste durch 1 bis 4 $C_1$-$C_4$-Alkoxygruppen, vorzugsweise Methoxy, und/oder durch 1 bis 4 Halogenatome, bevorzugt Chlor, Brom, substituiert sein können, und

R einen Arylrest mit 6 bis 18 C-Atomen, bevorzugt Phenyl, einen Alkylphenylrest mit 7 bis 11 C-Atomen, bevorzugt p-tert.-Butylphenyl, oder einen p-Phenylhalogenrest, bevorzugt p-Chlorphenyl, darstellt, dadurch gekennzeichnet, daß das Molverhältnis I:II 0 bis 85:100 bis 15, vorzugsweise 50 bis 75:50 bis 25, und das

Molverhältnis II:III 1 bis 0,95:1 bis 1,05, vorzugsweise 1 bis 0,98:1 bis 1,02, insbesondere 1,0:1,0 beträgt.

Bevorzugte Struktureinheiten der allgemeinen Formel (III) leiten sich von der Thiophenylterephthalsäure, der p-Chlorthiophenylterephthalsäure, der p-Methylthiophenylterephthalsäure oder der ß-Thionaphthylterephthalsäure ab.

Die sich wiederholenden Einheiten der Formel (III) können bis zu einem Anteil von 50 Mol-%, vorzugsweise bis zu 20 Mol-%, durch andere lineare Dicarbonsäuren ersetzt sein. In besonders bevorzugten Zusammensetzungen sind die sich wiederholenden Einheiten der Formel (III) nicht durch andere Dicarbonsäuren ersetzt.

Aromatische Dicarbonsäuren, die die sich wiederholenden Einheiten der Formel (III) ersetzen können, sind beispielsweise Terephthalsäure, 2,6-Naphthalindicarbonsäure, 1,4-Naphthalindicarbonsäure, 1,5-Naphthalindicarbonsäure, 4,4′-Diphenyldicarbonsäure, 4,4′-Terphenyldicarbonsäure, 4,4′-trans-Stilbendicarbonsäure, 4,4′-Tolandicarbonsäure,4,4′-Azobenzoldicarbonsäure, Methylterphthalsäure, Methoxyterephthalsäure, Chlorterephthalsäure sowie Phenylterephthalsäure, insbesondere Terephthalsäure.

Die erfindungsgemäßen Polyester können Mischungen der oben beschriebenen sich wiederholenden Einheiten der Formel (III) enthalten; bevorzugt sind jedoch solche Polyester, die als Dicarbonsäurereste nur eine der genannten Komponenten enthalten.

Bevorzugte Diphenole, die zu Einheiten der Formel (II) führen, sind beispielsweise 4,4′-Dihydroxidiphenyl, Hydrochinon, Resorcin und/oder 4,4′-Dihydroxybenzophenon, insbesondere 4,4′-Dihydroxydiphenyl und/oder Hydrochinon.

Hydroxycarbonsäuren, die zu Einheiten der Formel (I) führen, sind beispielsweise 4-Hydroxybenzoesäure, 6-Hydroxy-2-naphthoesäure, 4-Hydroxy-1-naphthoesäure, 5-Hydroxy-1-naphthoesäure, 4′-Hydroxy-4-biphenylcarbonsäure, 4-Hydroxy-trans-zimtsäure, 3-Chlor-4-hydroxybenzoesäure, 3-Methyl-4-hydroxybenzoesäure, 3-Phenyl-4-hydroxybenzoesäure, 3-Methoxy-4-hydroxybenzoesäure und/oder 3-Methoxy-4-hydroxyzimtsäure. Besonders bevorzugt ist 4-Hydroxybenzoesäure.

Bei der Verwendung von Hydroxycarbonsäuren und Diphenolen, die zu Resten $Ar^1$ und $Ar^2$ führen, deren kettenverlängerende Bindungen gewinkelt sind, wird man eine Menge nicht überschreiten, die die thermotropen Eigenschaften der resultierenden Polyester verlorengehen läßt.

Als Endgruppen können die erfindungsgemäßen Polyester -COOH, -OH, $OC_6H_5$, Acyloxy oder von Kettenabbrechern herrührende Reste enthalten. Bevorzugte Kettenabbrecher sind monofunktionelle aromatische Hydroxylverbindungen, wie 4-Hydroxydiphenyl, p-Nonylphenol, 4-(1,1,3,3-Tetramethylbutyl)-phenol, ß-Naphthol und aromatische Monocarbonsäuren. Kettenabbrecher können in Mengen von ca. 0,5 bis 5 Mol-%, bei Monohydroxylverbindungen bezogen auf Diphenole, bei Monocarbonsäuren bezogen auf Dicarbonsäuren, eingesetzt werden.

Es können auch verzweigende drei - oder höherfunktionelle - vorzugsweise aromatische Monomere in Mengen von ca. 0,1 bis 1 Mol-%, bezogen auf die Summe der Komponenten I und II, wie Phloroglucin, 1,3,5-Benzoltricarbonsäure und 3,5-Dihydroxybenzoesäure, eingesetzt werden.

Die erfindungsgemäßen Polyester können bis zu 10 Mol-% Carbonatgruppen, bezogen auf die Summe von Ester- und Carbonatgruppen, enthalten.

Die erfindungsgemäßen Polyester können die Reste I bis III in statistischer Verteilung, in Segmenten oder in Blöcken enthalten. Bei der Komponente I ist darauf zu achten, daß längere Blöcke den Schmelzpunkt und die Schmelzviskosität der Polyester stark erhöhen können.

Die Schmelzviskosität der erfindungsgemäßen Polyester, gemessen jeweils oberhalb der durch DSC bestimmten Übergangstemperatur von der kristallinen in die flüssigkristalline Phase (üblicherweise zwischen 200 und 350 °C) unter Verwendung einer Düse mit einem Länge/Durchmesser-Verhältnis von 20 bei einer Schergeschwindigkeit von $10^{-3}$ $s^{-1}$, beträgt in der Regel 2 bis 2000, vorzugsweise 5 bis 1000, insbesondere 10 bis 500 Pas.

Die erfindungsgemäßen Polyester können durch Umsetzung der Diphenole oder ihrer reaktionsfähigen Derivate, z.B. ihrer $C_1$ bis $C_3$-Acylderivate, mit den Dicarbonsäuren oder ihren reaktionsfähigen Derivaten, z.B. ihren Dihalogeniden oder Diestern, gegebenenfalls in Gegenwart von Verzweigungsmitteln, Kettenabbrechern und/oder Katalysatoren, nach verschiedenen Verfahren hergestellt werden.

Bevorzugtes Syntheseverfahren ist die Umsetzung der acetylierten, aromatischen Hydroxyverbindungen, die auch in situ erzeugt werden können, mit den aromatischen Carbonsäuren bei Temperaturen von ca. 160 bis 400 °C unter Verwendung eines für solche Reaktionen üblichen Katalysators, gegebenenfalls unter vermindertem Druck.

Ein weiteres, bevorzugtes Syntheseverfahren ist die Umsetzung der Phenylester der aromatischen Carbonsäuren, die auch in situ erzeugt werden können, mit den Diphenolen bei Temperaturen von ca. 160 bis 400 °C unter Verwendung eines für solche Reaktionen üblichen Katalysators, gegebenenfalls unter vermindertem Druck.

Carbonatgruppen können durch Verwendung von Diphenylcarbonat eingeführt werden.

Die erfindungsgemäßen Polyester können bei Temperaturen von ca. 160 bis 400 °C hergestellt werden, wobei man im allgemeinen die Reaktion bei niedriger Temperatur beginnt und im Verlaufe des Reaktionsfortschritts kontinuierlich die Temperatur erhöht. Bei nachlassender Reaktionsgeschwindigkeit kann ein Vakuum angelegt werden, wobei der Druck vorzugsweise von Normaldruck bis auf ca. 0,1 mbar gesenkt wird.

Das erhaltene Produkt kann einer Härtung - vorzugsweise unter einer Sauerstoffatmosphäre oder einer Inertgasatmosphäre (Stickstoff, Edelgas), gegebenenfalls unter Zusatz von bis zu 25 Gew.-% Schwefel, vorzugsweise bis zu 5 Gew.-% Schwefel -, bei einer Temperatur von ca. 200 bis 350 °C unterworfen werden. Nach dem Härtungsprozeß weisen die erfindungsgemäßen Polyester eine deutlich verbesserte Chemikalienbeständigkeit, gemessen an ihrer Widerstandsfähigkeit gegen p-Chlorphenol, auf.

Die Ausgangsverbindungen werden in der Regel in solchen Mengen eingesetzt, daß Carboxyl- zu Hydroxyfunktionen in einem Verhältnis von 1:0,95 bis 1,05, vorzugsweise 1:0,98 bis 1,02 besonders bevorzugt 1:1, stehen.

Die Reaktionen können in der Schmelze oder in inerten hochsiedenden Lösungsmitteln durchgeführt werden.

Bevorzugte Katalysatoren für die Polykondensation sind Lewis-Säuren und Halogenwasserstoffsäuren; Oxide, Hydride, Hydroxide, Halogenide, Alkoholate, Phenolate, Salze anorganischer und organischer Säuren (vorzugsweise Carbonsäuresalze), Komplexsalz oder Mischsalze der Erdalkalimetalle, Magnesium, Calcium; der Nebengruppenmetalle, wie Vanadium, Titan, Mangan, Cobalt, Nickel, Zink, Lanthan, Cer, Zirkonium oder der Elemente aus anderen Gruppen des Periodensystems, wie Germanium, Zinn, Blei und Antimon oder auch die Alkalimetalle oder Erdalkalimetalle selbst, insbesondere Natrium. Genannt seien: Natriumhydroxid, Lithiumacetat, Magnesiumacetat, Cobaltacetat, Zinkacetat, Calciumbenzoat, Magnesiumacetylacetonat, Zinkacetylacetonat, Vanadyl-$C_1$-$C_8$-alkoxide, Titanalkoxide, wie Titantetrabutylat, Titantetrapropylat, Alkoxytitansilikate, Zirkoniumbutylat, Zirkoniumpropylat, Titantetraphenolat, Natriumphenolat, Germaniumdioxid, Antimontrioxid, Dialkyl- und Diarylzinnoxid, Di-butylzinn-diacetat und Di-butyl-dimethoxyzinn. Besonders bevorzugt sind Magnesium-, Mangan-, Natrium-, Kalium- und Zinkacetat, Titantetrabutylat, Titantetrapropylat und/oder Natriumphenolat. Die Katalysatormengen betragen vorzugsweise 0,001 bis 1 Gew.-%, insbesondere 0,01 bis 0,2 Gew.-%, bezogen auf das Gesamtgewicht der eingesetzten Monomeren.

Die erfindungsgemäßen linearen, thermotropen Polyester können infolge ihrer relativ geringen Schmelzviskosität thermoplastisch zu Spritzgußteilen, Filamenten, Fasern, Bändern und Filmen verarbeitet werden. Durch die bei der Verarbeitung auftretenden Scherkräfte wird eine Molekülorientierung erzielt, die in hohem Maße von der Stärke dieser Kräfte beeinflußt wird. Des weiteren zeigen sie eine ausgeprägte Strukturviskosität, d.h. daß die Schmelzviskosität bei Erhöhung der Scherkräfte stark abfällt. Geeignete Verarbeitungsverfahren sind Spritzguß, Extrusion, Pressen und Schmelzspinnen.

Aus den erfindungsgemäßen Polyestern können Formteile hoher Zugfestigkeit, hoher Wärmeformbeständigkeit und großer Dimensionsstabilität hergestellt werden. Da die Polyester, insbesondere nach der Härtung außerordentlich chemikalienresistent sind, eignen sie sich bevorzugt zur Herstellung von:

- elektrotechnischen Artikeln, wie Isolatoren, gedruckten Schaltungen, Steckkontakten, Armaturentielen und Umhüllungen von integrierten Schaltungen,
- Teilen chemisch-technischer Apparate, wie z.B. Rohren, Behälterauskleidungen, Rotoren, Gleitfasern und Dichtungen,
- Teilen der Flugzeuginnenausstattung,
- Teilen medizinisch-technischer Geräte.

Die erfindungsgemäßen Polyester können aber auch als Überzugs- und Beschichtungsmaterial - pulverförmig oder dispergiert - verwendet werden. Auch zur Herstellung verstärkter oder gefüllter Formmassen mit einem Verstärkung- und/oder Füllstoffgehalt von ca. 5 bis 65 Gew.-%, bezogen auf verstärkte und/oder gefüllte Formmasse, sind sie bestens geeignet.

Weiterer Gegenstand der Erfindung ist also die Verwendung der neuen linearen, thermotropen Polyester zur Herstellung von Formkörpern, Filamenten, Fasern und Filmen.

## Beispiele

Die Prozentangaben der nachfolgenden Beispiele beziehen sich jeweils auf das Gewicht.

Die Prüfung der Kerbschlagzähigkeit $a_k$ erfolgte an Normkleinstäben gemäß DIN 53 453 (ISO/R 179) bei 23 °C jeweils an 10 Prüfkörpern. Der Zug-E-Modul wurde gemäß DIN 53 455 (ISO/R 527) gemessen. Die Wärmeformbeständigkeit wurde in Anlehnung an die DIN 53 460 (Vicat-A) mittels einer auf einen Prüfkörper

aufgesetzten Spitze bei einer Belastung von 1 kg/mm² und einer Aufheizrate von 10 °C/min ermittelt.

Beispiel 1

In eine mit Stickstoff gespülte und ausgeheizte Schmelzkondensationsapparatur, bestehend aus einem 1 l-Planschliffgefäß mit Planschliffdeckel, Rührer, Stickstoffeinleitung und Destillationsaufsatz, wurden folgende Substanzen eingewogen:

| | | | |
|---|---|---|---|
| 119,65 g | = | 0,44 Mol | Thiophenylterephthalsäure, |
| 23,06 g | = | 0,29 Mol | Hydrochinon |
| 27,07 g | = | 0,15 Mol | 4,4′-Dihydroxydiphenyl |
| 122,35 g | = | 0,89 Mol | p-Hydroxybenzoesäure |
| 188,68 g | = | 1,85 Mol | Essigsäureanhydrid |
| 0,04 g | = | Germaniumoxid. | |

Unter leichtem Stickstoffstrom wurde die Reaktionsmischung mittels Salzbad auf 185 °C aufgeheizt. Im Verlauf von 1 Stunde wurde die Temperatur auf 235 °C erhöht. Essigsäure destillierte ab. Nach Ablauf von 1,5 Stunden wurde die Temperatur auf 280 °C gesteigert und weitere Essigsäure abdestilliert. Nach Ablauf von 1,5 Stunden wurde die Essigsäureabspaltung durch Druckerniedrigung bis aus 12 mbar und Temperaturerhöhung auf 300 °C innerhalb von 1 Stunde zu Ende geführt. Nach dem Abkühlen wurde ein beigefarbener Polyester erhalten (Ausbeute: 209,7 g = 95,2 % der Theorie).

Unter dem Polarisationsmikroskop wurde oberhalb von 195 °C eine anisotrope Schmelze beobachtet.

Die inhärente Viskosität in p-Chlorphenol, gemessen bei 45 °C und einer Konzentration von 5 g/l betrug 3,04 dl/g.

Die Wärmeformbeständigkeit betrug 127 °C.

Der Zug-E-Modul betrug 14 750 MPa.

Die Zugfestigkeit betrug 126 MPa.

Beispiel 2

Härtung eines Polyesters mit Thiophenylterephthalsäureeinheiten:

Ein Polyester, bestehend aus
33 Mol-% Thiophenolterephthalsäure
22 Mol-% Hydrochinon
11 Mol-% 4,4′-Dihydroxydiphenyl
67 Mol-% p-Hydroxybenzoesäure
mit einer inhärenten Viskosität von 2,13 dl/g, gemessen in p-Chlorphenol bei 45 °C, wurde unter verschiedenen Bedingungen bei 300 °C gehärtet. Die dadurch erreichte Verbesserung der Chemikalienresistenz dokumentiert sich in der Abnahme der Löslichkeit des gehärteten Polyesters in p-Chlorphenol (Tabelle 1).

Tabelle 1

| Härtung eines Polyesters mit Phenylthioterephthalsäureeinheiten | | | | |
|---|---|---|---|---|
| Zeit [h] | $N_2$ | Atmosphäre[1] | | |
| | | Luft | $N_2$[2] | Luft[2] |
| 0 | 0 | 0 | 0 | 0 |
| 0,5 | 0 | 0,4 | 0,1 | 0,2 |
| 1 | 0 | 0,2 | 0,2 | 0,1 |
| 2 | 0,8 | 72,3 | 0,3 | 27,4 |
| 4 | 0,8 | 43,0 | 40,0 | 86,6 |
| 8 | 2,1 | 44,6 | 85,3 | 98,2 |

[1] angegeben ist der in p-Chlorphenol unlösliche Anteil in %
[2] Zusatz von 5 Gew.-% Schwefel

Beispiel 3

In eine mit Stickstoff gespülte und ausgeheizte Schmelzkondensationsapparatur, bestehend aus einem 250 ml-Planschliffgefäß mit Planschliffdeckel, Rührer, Stickstoffeinleitung und Destillationsaufsatz, wurden folgende Substanzen eingewogen:

| | | | |
|---|---|---|---|
| 27,43 g | = | 0,10 Mol | Thiophenylterephthalsäure, |
| 19,42 g | = | 0,10 Mol | Hydrochinonbisacetat |
| 0,01 g | = | Magnesiumoxid | |

Unter leichtem Stickstoffstrom wurde die Reaktionsmischung mittels Salzbad auf 270 °C aufgeheizt. Nach Ablauf von 1 Stunde wurde die Temperatur auf 300 °C erhöht. Essigsäure destillierte ab. Die Temperatur wurde nach 30 Minuten auf 320 °C erhöht und weitere Essigsäure abdestilliert. Durch Druckerniedrigung bis auf 1 mbar wurde die Essigsäureabspaltung innerhalb von 20 min zur Ende geführt. Nach dem Abkühlen wurde ein beigefarbender Polyester erhalten (Ausbeute: 34,0 g = 97,6 % der Theorie).

Unter dem Polarisationsmikroskop wurde oberhalb von 330 °C eine anisotrope Schmelze beobachtet.

Die inhärente Viskosität in Trifluoressigsäure/Methylenchlorid (1:4 Volumenteile), gemessen bei 20 °C und einer Konzentration von 2 g/l betrug 0,97 dl/g.

Die Wärmeformbeständigkeit betrug 290 °C.

Beispiel 4

In eine mit Stickstoff gespülte und ausgeheizte Schmelzkondensatiosapparatur, bestehend aus einem 250 ml-Planschliffgefäß mit Planschliffdeckel, Rührer, Stickstoffeinleitung und Destillationsaufsatz, wurden folgende Substanzen eingewogen:

| | | | |
|---|---|---|---|
| 30,87 g | = | 0,10 Mol | p-Chlorthiophenylterephthalsäure, |
| 19,42 g | = | 0,10 Mol | Hydrochinonbisacetat |
| 0,01 g | = | Magnesiumoxid | |

Unter leichtem Stickstoffstrom wurde die Reaktionsmischung mittels Salzbad auf 250 °C aufgeheizt. Nach Ablauf von 15 Minuten wurde die Temperatur auf 290 °C erhöht. Essigsäure destilliert ab. Die Temperatur wurde nach 2 Stunden 310 °C gesteigert und weitere Essigsäure abdestilliert. Durch Druckerniedrigung bis aus 1 mbar wurde die Essigsäureabspaltung innerhalb von 30 min zu Ende geführt. Nach dem Abkühlen wurde ein beigefarbener Polyester erhalten (Ausbeute: 32,3 g = 84,3 % der Theorie).

Unter dem Polaristionsmikroskop wurde oberhalb von 300 °C eine anisotrope Schmelze beobachtet.

Beispiel 5

In eine mit Stickstoff gespülte und ausgeheizte Schmelzkondensationsapparatur, bestehend aus einem 250 ml-Planschliffgefäß mit Planschliffdeckel, Rührer, Stickstoffeinleitung und Destillationsaufsatz, wurden folgenden Substanzen eingewogen:

| | | | |
|---|---|---|---|
| 28,83 g | = | 0,10 Mol | p-Methylthiophenylterephthalsäure, |
| 19,42 g | = | 0,10 Mol | Hydrochinonbisacetat |
| 0,01 g | = | Magnesiumoxid | |

Unter leichtem Stickstoffstrom wurde die Reaktionsmischung mittels Salzbad auf 250 °C aufgeheizt. Im Verlauf von 15 Minuten wurde die Temperatur auf 290 °C erhöht. Essigsäure destillierte ab. Nach Ablauf von 45 Minuten wurde die Temperatur auf 300 °C gesteigert und innerhalb von 30 Minuten weitere Essigsäure abdestilliert. Durch Druckerniedrigung bis auf 1 mbar wurde die Essigsäureabspaltung innerhalb von 30 min zu Ende geführt. Nach dem Abkühlen wurde ein beigefarbender Polyester erhalten (Ausbeute: 34,8 g = 96,0 % der Theorie).

Unter dem Polarisationsmikroskop wurde oberhalb von 315 °C eine anisotrope Schmelze beobachtet.

Die inhärente Viskosität in Trifluoressigsäure/Methylenchlorid (1:4 Volumenteile, gemessen bei 20 °C und einer Konzentration von 2 g/l betrug 0,93 dl/g.

Die Wärmeformbeständigkeit betrug 250 °C.

Beispiel 6

In eine mit Stickstoff gespülte und ausgeheizte Schmelzkondensationsapparatur, bestehend aus einem 250 ml-Planschliffgefäß mit Planschliffdeckel, Rührer, Stickstoffeinleitung und Destillationsaufsatz, wurden folgende Substanzen eingewogen:

| | | | |
|---|---|---|---|
| 32,44 g | = | 0,10 Mol | β-Thionaphthylterephthalsäure, |
| 19,42 g | = | 0,10 Mol | Hydrochinonbisacetat |
| 0,01 g | = | Magnesiumoxid | |

Unter leichtem Stickstoffstrom wurde die Reaktionsmischung mittels Salzbad auf 280 °C aufgeheizt. Im Verlauf von 15 Minuten wurde die Temperatur auf 300 °C erhöht. Essigsäure destillierte ab. Nach Ablauf von 30 min wurde die Essigsäureabspaltung durch Druckerniedrigung bis auf 1 mbar innerhalb von 30 min zu Ende geführt.

Nach dem Abkühlen wurde ein beigefarbener Polyester erhalten (Ausbeute: 34,1 g = 85 % der Theorie).

Unter dem Polarisationsmikroskop wurde oberhalb von 250 °C eine anisotrope Schmelze beobachtet.

Die inhärente Viskosität in Trifluoressigsäure/Methylenchlorid (1:4 Volumenteile), gemessen bei 20 °C und einer Konzentration von 2 g/l betrug 0,49 g/l.

Die Wärmeformbeständigkeit betrug 242 °C.

Beispiel 7

In eine mit Stickstoff gespülte und ausgeheizte Schmelzkondensationsapparatur, bestehend aus einem 250 ml-Planschliffgefäß mit Planschliffdeckel, Rührer, Stickstoffeinleitung und Destillationsaufsatz, wurden folgende Substanzen eingewogen:

| | | | |
|---|---|---|---|
| 27,43 g | = | 0,10 Mol | β-Thiophenylterephthalsäure, |
| 20,82 g | = | 0,10 Mol | Methylhydrochinonbisacetat, |
| 0,01 g | = | Magnesiumoxid | |

Unter leichtem Stickstoffstrom wurde die Reaktionsmischung mittels Salzbad auf 280° C aufgeheizt. Im Verlauf von 15 Minuten wurde die Temperatur auf 300° C erhöht. Essigsäure destillierte ab. Nach Ablauf von 2 Stunden wurde die Essigsäureabspaltung durch Druckerniedrigung bis auf 1 mbar innerhalb von 30 min zu Ende geführt. Nach dem Abkühlen wurde ein beigefarbener Polyester erhalten (Ausbeute: 29,6 g = 85,0 % der Theorie).

Unter dem Polarisationsmikroskop wurde oberhalb von 265° C eine anisotrope Schmelze beobachtet.

Die inhärente Viskosität in Trifluoressigsäure/Methylenchlorid (1:4 Volumenteile), gemessen bei 20° C und einer Konzentration von 2 g/l betrug 0,79 g/l.

Die Wärmeformbeständigkeit betrug 208° C.

Beispiel 8

In eine mit Stickstoff gespülte und ausgeheizte Schmelzkondensationsapparatur, bestehend aus einem 250 ml-Planschliffgefäß mit Planschliffdeckel, Rührer, Stickstoffeinleitung und Destillationsaufsatz, wurden folgende Substanzen eingewogen:

| | | | |
|---|---|---|---|
| 27,43 g | = | 0,10 Mol | β-Thiophenylterephthalsäure, |
| 19,42 g | = | 0,10 Mol | Hydrochinonbisacetat, |
| 0,01 g | = | Magnesiumoxid | |

Unter leichtem Stickstoffstrom wurde die Reaktionsmischung mittels Salzbad auf 280° C aufgeheizt. Im Verlauf von 15 Minuten wurde die Temperatur auf 300° C erhöht. Essigsäure destillierte ab. Nach Ablauf von 2 Stunden wurde die Essigsäureabspaltung durch Druckerniedrigung bis auf 1 mbar innerhalb von 30 min zu Ende geführt. Nach dem Abkühlen wurde ein beigefarbener Polyester erhalten (Ausbeute: 49,3 g = 83,8 % der Theorie).

Unter dem Polarisationsmikroskop wurde oberhalb von 290° C eine anisotrope Schmelze beobachtet.

Die inhärente Viskosität in Trifluoressigsäure/Methylenchlorid (1:4 Volumenteile), gemessen bei 20° C und einer Konzentration von 2 g/l betrug 2,01 g/l.

Die Wärmeformbeständigkeit betrug 140° C.

Beispiel 9

In eine mit Stickstoff gespülte und ausgeheizte Schmelzkondensationsapparatur, bestehend aus einem 250 ml-Planschliffgefäß mit Planschliffdeckel, Rührer, Stickstoffeinleitung und Destillationsaufsatz, wurden folgende Substanzen eingewogen:

| | | | |
|---|---|---|---|
| 27,43 g | = | 0,10 Mol | β-Thiophenylterephthalsäure, |
| 19,42 g | = | 0,10 Mol | Hydrochinonbisacetat, |
| 54,05 g | = | 0,10 Mol | p-Acetoxybenzoesäure, |
| 0,01 g | = | Magnesiumoxid | |

Unter leichtem Stickstoffstrom wurde die Reaktionsmischung mittels Salzbad auf 280° C aufgeheizt. Im Verlauf von 15 Minuten wurde die Temperatur auf 300° C erhöht. Essigsäure destillierte ab. Nach Ablauf von 2 Stunden wurde die Essigsäureabspaltung durch Druckerniedrigung bis auf 1 mbar innerhalb von 60 min zu Ende geführt. Nach dem Abkühlen wurde ein beigefarbener Polyester erhalten (Ausbeute: 65,4 g = 86,2 % der Theorie).

Unter dem Polarisationsmikroskop wurde oberhalb von 165° C eine anisotrope Schmelze beobachtet.

Die inhärente Viskosität in Trifluoressigsäure/Methylenchlorid (1:4 Volumenteile), gemessen bei 20° C

und einer Konzentration von 2 g/l betrug 0,97 g/l.

Die Wärmeformbeständigkeit betrug 149 °C.

## Ansprüche

1. Thermotrope aromatische Polyester mit wiederkehrenden Einheiten der Formeln

$-\overset{\overset{\displaystyle O}{\|}}{C}-Ar^1-O-$ (I)

$-O-Ar^2-O$ (II)

und

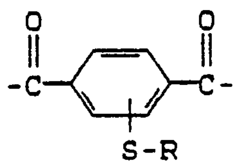

(III),

worin

$Ar^1$ und $Ar^2$ bivalente aromatische Reste mit 8 bis 16 C-Atomen darstellen, deren kettenverlängernde Bindungen zu mindestens 90 Mol-% coaxial oder parallel entgegengesetzt und zu höchstens 10 Mol-% gewinkelt sind, wobei diese Reste durch 1 bis 4 $C_1$-$C_4$-Alkoxygruppen und/oder durch 1 bis 4 Halogenatome substituiert sein können, und

R einen Arylrest mit 6 bis 18 C-Atomen, einen p-Alkylphenylrest mit 7 bis 11 C-Atomen, einen p-Alkylphenylrest mit 7 bis 11 C-Atomen oder einen p-Phenylhalogenrest bedeutet,

dadurch gekennzeichnet, daß das Molverhältnis I:II 0 bis 85:100 bis 15 und das Molverhältnis II:III 1 bis 95:1 bis 1,05 beträgt.

2. Polyester nach Anspruch 1, dadurch gekennzeichnet, daß das Molverhältnis der Reste I:II 50 bis 75:50 bis 25 beträgt.

3. Polyester nach Anspruch 1 und 2, dadurch gekennzeichnet, daß die Reste der sich wiederholenden Einheiten der Formel (II) 1,4-Phenylenreste und/oder 4,4′-Biphenylenreste sind.

4. Polyester nach den Ansprüchen 1 bis 3, dadurch gekennzeichnet, daß die sich wiederholenden Einheiten der Formel (I) Reste der 4-Hydroxybenzoesäure sind.

5. Polyester nach den Ansprüchen 1 bis 4, dadurch gekennzeichnet, daß die Reste der sich wiederholenden Einheiten der Formel (III) Reste der Thiophenylterephthalsäure, der p-Chlorthiophenylterephthalsäure, der p-Methylthiophenylterephthalsäure und/oder ß-Thionaphthylterephthalsäure sind.

6. Polyester nach den Ansprüchen 1 bis 5, dadurch gekennzeichnet, daß die Reste der sich wiederholenden Einheiten der Formel (III) Reste der Thiophenylterephthalsäure sind.

7. Verfahren zur Herstellung der thermotropen aromatischen Polyester nach den Ansprüchen 1 bis 6, dadurch gekennzeichnet, daß man die Hydroxycarbonsäuren, die Diphenole und die substituierten Terephthalsäuren oder ihre reaktionsfähigen Derivate gegebenenfalls in Gegenwart von Kettenabbrechern, Verzweigungsmitteln und Katalysatoren bei Temperaturen von 160 bis 350 °C, gegebenenfalls unter vermindertem Druck, umsetzt.

8. Verwendung der thermotropen aromatischen Polyester nach Ansprüchen 1 bis 6 zur Herstellung von Formkörpern, Filamenten, Fasern und Filmen.

Europäisches Patentamt

# EUROPÄISCHER RECHERCHENBERICHT

Nummer der Anmeldung

EP 89 10 7233

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-3 148 209 (E. F. JASON et al.) * Anspruch 3; Spalte 1, Zeilen 17-29; Spalte 3, Zeilen 10-13 * | 1 | C 08 G 63/68<br>C 08 G 63/60<br>C 09 K 19/38 |
| D,A | PATENT ABSTRACTS OF JAPAN Band 9, Nr. 200 (C-298) (1923) 16. August 1985; & JP - A - 60 69132 (TEIJIN K.K.) 19.04.1985 * das ganze Dokument * | 1,3 | |
| A | EP-A-0 170 935 (BAYER AG) * Ansprüche 1-4,6 * | 1-4,7,8 | |
| L | MAKROMOLEKULARE CHEMIE Band 189, 1988, Seiten 1437-1446; H. R. KRICHELDORF et al.: "New polymer syntheses, 30; Thermotropic polyesters of 2-(2-naphthylthio)terephthalic acid" * den gesamten Artikel * | 1,8 | |
| L | MAKROMOLEKULARE CHEMIE Band 189, 1988, Seiten 1425-1435; H. R. KRICHELDORF et al.: "New polymer syntheses, 29; Thermotropic (co)polyesters of 2-phenylthioterephthalic acid and various diphenols" * den gesamten Artikel * | 1-8 | RECHERCHIERTE SACHGEBIETE (Int. Cl.4)<br>C 08 G<br>C 09 K |

Der vorliegende Recherchenbericht wurde für alle Patentansprüche erstellt

| Recherchenort | Abschlußdatum der Recherche | Prüfer |
|---|---|---|
| BERLIN | 28-07-1989 | VOIGTLAENDER R O J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument